# EUROPÄISCHE PATENTANMELDUNG

(11) **EP 4 317 266 A1**
(43) Veröffentlichungstag der Anmeldung: **07.02.2024**
(21) Anmeldenummer: 22188299.6
(22) Anmeldetag: 02.08.2022
(51) Int. Cl.: C08J 5/06, B29C 70/00, B32B 5/00, B32B 7/00, C08J 5/24, C08L 75/04

(54) **FLÄCHIGES HALBFERTIGPRODUKT MIT EINER KUNSTSTOFFMATRIX UND EINER THERMOPLASTISCHEN FOLIE**

(71) Anmelder: nolax AG, 6203 Sempach Station (CH)
(72) Erfinder: Schaller, Raphael, 6005 Luzern (CH); Roos, Erik, 6023 Rothenbrug (CH); Hosotte, Claude, 68220 Michelbach le Haut (FR); Weiland, Guntram, 6207 Nottwil (CH)
(74) Vertreter: Hepp Wenger Ryffel AG

(57) **Zusammenfassung**

Die Erfindung betrifft ein flächiges Halbfertigprodukt aufweisend
- eine Matrix mit wenigstens einer latent reaktiven Kunststoffzusammensetzung, wobei die Kunststoffzusammensetzung zu einem Elastomer, insbesondere thermoplastischen Elastomer, aushärtbar ist,
- in der Matrix eingebettete Endlosfasern, wobei die Fasern bevorzugt unidirektional ausgerichtet sind,

Das flächige Halbfertigprodukt weist weiter eine thermoplastische Folie auf. Die Erfindung betrifft auch ein Verfahren zum Herstellen eines solchen flächigen Halbfertigprodukts sowie die Verwendung eines solchen flächigen Halbfertigproduktes.

## Beschreibung

Die Erfindung betrifft ein flächiges Halbfertigprodukt, ein Verfahren zum Herstellen von flächigen Halbfertigprodukten sowie die Verwendung eines flächigen Halbfertigprodukts gemäss den Oberbegriffen der unabhängigen Ansprüche.

Faserverstärkte Kunststoffe gewinnen für die Herstellung struktureller Bauteile zunehmend an Bedeutung. Solche Bauteile eignen sich insbesondere zum Einsatz im Motorsport-, Raumfahrt-, Schienenfahrzeug- und Flugzeugbau. Beispielsweise weisen diese Bauteile bei gleicher Leistungsfähigkeit ein geringeres Gewicht als konventionelle Bauteile aus Stahl, Aluminium oder Holz auf, was zu Einsparungen bei Energie - und Kraftstoffverbrauch führt.

Faserverstärkte Kunststoffe lassen sich beispielsweise durch Einbettung von Fasern in eine Kunststoffmatrix und anschliessendes Aushärten erzielen. Als Kunststoffmatrix dominieren dabei duromere Harzsysteme. Alternativ können die Fasern und das Harz mit geeigneten Härtern kombiniert werden und in einem ungehärteten Zustand gelagert werden. Die Vernetzung zu einem faserverstärkten Kunststoff erfolgt dann erst zu einem späteren Zeitpunkt. Typischerweise werden als Harze Epoxidharze eingesetzt. Diese sind jedoch aufgrund der Anwesenheit von Härtern und Beschleunigern in der Harzmatrix nur eine begrenzte Zeit lagerstabil. Um eine vorzeitige Vernetzung zu vermeiden, werden solche reaktiven Systeme bei tiefen Temperaturen (ca. -20°C) gelagert und müssen vor der Weiterverarbeitung angetaut werden.

EP3330311 A1 beschreibt Prepregs bestehend aus einem faserigen Material, getränkt mit latent reaktiven 1K-Polyurethan ohne Harzkomponente zur Herstellung von Composite-Bauteilen.

WO 2020/059476 A1 beschreibt ein mit Cyanatestern getränktes Gewebe, das u.a. zur Herstellung von mit Metallfolien kaschiertes Laminat verwendet werden kann.

WO 2019/088009 A1 beschreibt ein zweischichtiges Tape bestehend aus einer Lage reaktivem Klebstoff und einer Verstärkungsschicht mit ausgerichteten Fasern. Die Matrix der Faserverstärkung wirkt nicht als Klebstoff.

WO 99/29755 A1 und EP3730528 A1 beschreiben latent reaktive Polyurethansysteme basierend auf verkapselten Isocyanaten und Carbodiimiden. Sie enthalten keine Langfasern als Füllstoffe.

Allgemein bekannt sind faserverstärkte Selbstklebebänder (Ducttape, Panzertape), auch in Ausführungen mit orientierten (parallelen) Fasern, sog. Filamentband. Gemein ist diesen Selbstklebebändern, dass sie nur per Druck und ohne Temperatur appliziert werden und dass die Faserverstärkung, sofern sie sich überhaupt in einer separaten Schicht befindet, nicht mit einem latent reaktiven Klebstoff ausgerüstet ist.

Bekannt sind ebenso langfaserverstärkte Composite, welche eine thermoplastische oder duroplastische (und schon vernetzte) Matrix aufweisen. Solche (Endlos)-Fasern werden durch den Extrusions- oder Pultrusionsprozess ausgerichtet.

WO 2018/234423 A1 beschreibt beispielsweise ein flächiges Halbfertigprodukt aus einer Kunststoffmatrix mit eingebetteten, unidirektional ausgerichteten, Endlosfasern.

Eine grosse Schwäche unidirektionaler Tapes ist die geringe Stabilität in Querrichtung zur Faser. Die noch nicht vernetzte Matrix ist sehr niedrig viskos und bietet somit kaum Widerstand gegen Scherkräfte im Verklebe- oder Vorbeschichtungsprozess. Die verklebbaren Substrate sind in Kombination und Vielfalt sehr beschränkt.

Es ist daher zumindest eine Aufgabe der Erfindung die Nachteile des Standes der Technik zu überwinden. Insbesondere ist es eine Aufgabe der Erfindung ein flächiges Halbfertigprodukt bereitzustellen, das eine besonders hohe Stabilität aufweist und eine hohe Substratvielfalt ermöglicht. Es ist auch eine Aufgabe der Erfindung ein Verfahren zur Herstellung eines solchen flächigen Halbfertigproduktes sowie eine Verwendung eines solchen Produktes bereitzustellen.

Diese Aufgaben werden durch die in den unabhängigen Patentansprüchen definierte Vorrichtung, Verfahren und Verwendung gelöst. Weitere Ausführungsformen ergeben sich aus den abhängigen Patentansprüchen.

Die Erfindung betrifft ein flächiges Halbfertigprodukt aufweisend:
- eine Matrix mit wenigstens einer latent reaktiven Kunststoffzusammensetzung, wobei die Kunststoffzusammensetzung zu einem Elastomer, insbesondere thermoplastischen Elastomer, aushärtbar ist,
- in der Matrix eingebettete Endlosfasern, wobei die Fasern bevorzugt unidirektional ausgerichtet sind.

Das flächige Halbfertigprodukt weist weiter eine thermoplastische Folie auf.

Unter "Einbetten" ist dabei eine makroskopische Ansicht zu verstehen, d.h. eine äussere Ansicht. Unter "Einbetten" ist insbesondere imprägnieren zu verstehen. Die Fasern sind von der Matrix umhüllt. Das Umhüllen kann beispielsweise durch Besprühen mit der Matrix oder durch Durchziehen der Fasern durch eine Matrixlösung erfolgen.

Im Rahmen dieser Anmeldung sind Endlosfasern alle Fasern aufweisend eine Länge ≥ 50 mm.

Das Elastomer, insbesondere thermoplastische Elastomer, kann weiche und harte Segmente aufweisen.

Das erfindungsgemässe Halbfertigprodukt zeichnet sich durch eine verbesserte Stabilität, insbesondere in einer Querrichtung zur Faser, aus. Es zeigte sich, dass, obwohl die thermoplastische Schicht selbst keine Faserverstärkung aufweist, die Zugfestigkeiten der Gesamtverbunde deutlich gesteigert werden konnte. Die positiven mechanischen Eigenschaften der Faserschicht transferieren sich somit auf das gesamte flächige Halbfertigprodukt. Die plastische Konsistenz des geschmolzenen thermoplastischen Klebefilms kann die Scherkräfte absorbieren.

Zudem hat das erfindungsgemässe Halbfertigprodukt den Vorteil, dass sich eine grössere Substratvielfalt verkleben lässt. Es wurde überraschend eine gute Haftung zwischen den beiden Klebstoffschichten - Kunststoffmatrix und thermoplastische Folie - gefunden. Sowohl eine genügend gute Anfangshaftung nach dem Trocknen der latent reaktiven Matrix wie vor allem nach der Verklebung der beiden Substrate ist gegeben. Durch eine geschickte Abfolge dieser Schichten ist die Substratvielfalt fast beliebig hoch.

Latent reaktive Kunststoffzusammensetzungen haben den Vorteil, dass sich die beiden Prozesse Vorbeschichtung und Verklebung gut voneinander trennen lassen.

Die thermoplastische Folie kann eine Mehrschichtfolie sein. Die Mehrschichtfolie kann unterschiedliche Oberflächeneigenschaften besitzen, insbesondere an ihren Aussenflächen. Dadurch lassen sich die Halbfertigprodukte an die gewünschte Anwendung anpassen.

Die thermoplastische Folie kann aus mindestens einer unpolaren Schicht aufweisend mindestens ein apolares Polymer und mindestens einer polaren Schicht aufweisend mindestens ein polares Polymer aufgebaut sein.

Als apolar im Sinne der Anmeldung wird ein Material und/oder eine Oberfläche verstanden, die eine Oberflächenspannung von weniger als 35mN/m aufweist. Als polar im Sinne der Anmeldung wird ein Material und/oder eine Oberfläche verstanden, die eine Oberflächenspannung von mehr als 37mN/m aufweist. Die Oberflächenspannung lässt sich mit handelsüblichen Testtinten bestimmen. Verschiedene Testreihen sind gemäss der DIN 53364 definiert. Eine andere Möglichkeit zur Bestimmung der Oberflächenspannung besteht im Messen des sog. Kontakt- oder Benetzungswinkels. Dabei wird der Winkel zwischen der Oberfläche und einem Wassertropfen gemessen. Je besser die Benetzbarkeit der Oberfläche desto kleiner der Winkel. Die Messung des Winkels erfolgt dabei beispielsweise durch ein Goniometer.

Vorzugsweise ist die mindestens eine polare Schicht den in die Matrix eingebetteten Endlosfasern zugewandt. Eine polare Schicht ist mit der Matrix besonders kompatibel und bildet dadurch einen besonders stabilen Verbund.

Vorzugsweise ist das mindestens eine apolare Polymer ausgewählt aus der Gruppe: Polypropylen, modifiziertes Polypropylen, Polyethylen, modifiziertes Polyethylen, Polyoxymethylen, Ethylvinylacetat, Styrolblockcopolymere, Ionomere, Olefine, Kautschuke oder Plastomere sowie Copolymere davon.

Vorzugsweise ist das mindestens eine polare Polymer ausgewählt aus der Gruppe: Polyamide, Copolyamide, Polyester, Copolyester, Polyurethane, Polyetherblockamide, Acrylate oder Polycarbonate. Besonders bevorzugt umfasst oder besteht die polare Schicht aus Acrylnitril-Butadien-Styrol-Copolymerisat (ABS) sowie dessen Abmischung mit Polycarbonat (ABS/PC), Polyamid (PA) oder Polyurethan (TPU).

Die Kunststoffzusammensetzung kann Polyurethan und ein latent reaktives, insbesondere verkapseltes, oberflächendeaktiviertes oder blockiertes Isocyanat, umfassen. Denkbar wäre auch ein strahlenvernetzbares Isocyanat. Die Mengenverhältnisse zwischen Polyurethan und Isocyanat können variieren. Beispielsweise sind folgende Zusammensetzungen für oberflächendesaktivierte Isocyanate denkbar: Bei 100 Gewichtsteilen (pbw = parts by weight) Polyurethan können 5 bis 10 pbw Toluol-2,4- diisocyanat Dimer (TDI Dimer) hinzugegeben werden. Es ist auch möglich zu 100 pbw Polyurethan 15 pbw Isophoron-Diisocyanat- Trimer (IPDI Trimer) dazuzugeben, um eine Vergilbung des Materials zu verhindern. Möglich ist auch, ein blockiertes Isocyanat zu verwenden. Bei 100 pbw Polyurethan können beispielsweise 2 bis 15 pbw (Dimethylpyrazol) -blockiertes Hexamethylen-4,6- diisocyanat (HDI) Trimer hinzugegeben werden.

Durch das latent reaktive Isocyanat erfolgt bei Raumtemperaturkeine Reaktion zwischen dem Isocyanat und den freien OH-Gruppen des Polyurethans. Das flächige Halbfertigprodukt kann bei Raumtemperatur über einen langen Zeitraum ohne Aufwand gelagert werden. Der Reaktionsprozess, also die Reaktion mit einem oberflächedesaktivierten Isocyanat, kann durch kurzes Anstossen der Reaktionen bei tiefen Temperaturen (<120°C) erfolgen. Es können aber blockierte Isocyanate verwendet werden, welche erst bei höheren Temperaturen, beispielsweise bei Temperaturen über 120° aktivierbar sind. Der Formgebungsvorgang (z.B. Pressen, Vakuumsackverfahren oder im Autoklav) kann dennoch kurzgehalten werden. Es können kurze Zykluszeiten verwendet werden, was einen positiven Einfluss auf die verwendbaren Fasern hat. Es ist somit auch der Einsatz von tiefschmelzenden Faserarten möglich, beispielsweise Polyamid, Polyethylen oder Polyester.

Die Kunststoffzusammensetzung kann Polyurethan und ein latent reaktives Carbodiimidumfassen. Solche Kunststoffzusammensetzung sind in WO 99/29755 A1 und EP3730528 A1 beschrieben.

Vorzugsweise ist die Kunststoffzusammensetzung eine Dispersion, besonders bevorzugt eine wässrige Dispersion. Die Kunststoffzusammensetzung kann auch als Pulver oder Schmelze vorliegen. Die Auftragung der Dispersion kann beispielsweise durch Sprühen, Aufrakeln, Tränken, Infusion und/oder Vakuuminfusion erfolgen. Die Fasern können aber auch durch die Dispersionslösung hindurchgezogen und dabei gespreizt werden. Die Dispersion fördert die Faserspreizung. Dadurch kann der Benetzungsgrad erhöht werden, was zu einer optimalen Fasereinbindung und hohem Faseranteil in der Matrix führt.

Die Fasern können auf Eiweiss, Cellulose, synthetischen Polymeren oder anorganischen Substanzen basieren.

Auf Eiweiss basierende Fasern können ausgewählt sein aus der Gruppe: Wolle, Seide, Angora, Kaschmir, Kasein, Kollagen, Ardein und Zein.

Cellulosefasern können Baumwolle und Bastfasern wie Baumwolle, Leinen, Hanf oder Jute sein. Cellulosefasern können auch holzbasiert sein wie beispielsweise Viscose, Modal, Lyocell, Cupro, Acetat.

Fasern aus synthetischen Polymeren können ausgewählt sein aus der Gruppe: Polyethylen, Polyester; Polyamid; Aramid; Polypropylen; Polyurethan (Elastan); Acryl; Polytetrafluorethylen; Polyphenylen-2,6-benzobisoxazol ; Flüssigkristallpolymere (LCP), insbesondere Poly (p-hydroxybenzoesäure-co-hydroxy-6-naphthoesäure.

Die Gruppe der Fasern aus anorganischen Substanzen umfassen Carbon, Keramik, Glas, Quarz, Metall.

Die Fasern können als einzelne Fasern in die Matrix eingebettet werden oder aber vorher zu einem Faden versponnen worden sein und als Faden eingebettet werden. Ebenso können die Fasern zu Fäden und dann zu einem Gewebe verarbeitet worden sein, wobei das Gewebe eingebettet wird. Es lassen sich auch Filamente einbetten. Wobei unter Filamente künstliche, beliebig lange Fasern zu verstehen sind. Ebenso ist es denkbar, dass eine Kombination aus unterschiedlichen Fasern eingebettet wird.

Die Möglichkeit verschiedene Faserarten zu verwenden hat den Vorteil, dass sich ein breites Anwendungsfeld erschliesst. Die Eigenschaften des Produktes können an den geplanten Verwendungszweck optimal angepasst werden.

Die Fasern sind bevorzugt im Wesentlichen in einer Längsausdehnung zu einer Hauptfläche des Halbfertigprodukts angeordnet. Bevorzugt sind die Fasern unidirektional ausgerichtet. Unter "unidirektional" wird hier verstanden, dass die Längsachsen der einzelnen Fasern im Wesentlichen parallel verlaufen. Unter "im Wesentlichen parallel verlaufen" wird verstanden, dass die Längsachsen der Fasern untereinander keine Winkel von mehr als ±25° einschliessen. Bevorzugt betragen die Winkel zwischen den Längsachsen der Fasern weniger als ±10°.

Unidirektionale Halbfertigprodukte haben den Vorteil, dass sie gezielt entlang dem Kraftverlauf aufgeschichtet werden können. Wenn mehrere flächige Halbfertigprodukte mit jeweils unidirektional ausgerichteten Fasern zueinander verdreht geschichtet werden, ergibt sich eine besonders hohe Widerstandsfähigkeit gegenüber mechanischen Einwirkungen von verschiedenen Seiten.

Die Fasern des flächigen Halbfertigproduktes sind vorzugsweise gespreizt. Gespreizte Fasern können besser benetzt werden, die Fasereinbindung und damit der Faseranteil werden erhöht. Ein höherer Faseranteil erhöht die Leistungsfähigkeit des Faserverbund-Bauteils. Die Faserspreizung ermöglicht zudem die Verwendung unterschiedlicher Faserarten in einem Halbfertigprodukt. Auch der Einsatz unterschiedlicher Kunststoffzusammensetzungen in einem Halbfertigprodukt ist denkbar. Dadurch können im Material verschiedene Eigenschaften kombiniert werden.

Die thermoplastische Folie kann weitere Zusätze, ausgewählt aus der Gruppe: Füllstoffe, Verarbeitungshilfsmittel, Stabilisatoren, Farbstoffe oder Kombinationen davon, enthalten. Als Füllstoffe kommen insbesondere Glasfasern, Kreide, oder Talk in Frage.

Die Matrix kann ebenfalls weitere Zusätze, ausgewählt aus der Gruppe: thermoplastische Polymere, Füllstoffe, Verarbeitungshilfsmittel, Stabilisatoren, Farbstoffe oder Kombinationen davon, enthalten. Thermoplastische Polymere können beispielsweise Polyolefine, Ethyl-Acrylsäure (EAA), Ethylenvinylacetat (EVA), Polyvinylacetat (PVA), (Co)-polyester, (Co-)Polyamide, Styrolcopolymere, Acrylate, Polyvinylalkohole oder Kombinationen davon sein.

Ein weiterer Aspekt der Erfindung betrifft ein Verfahren zur Herstellung eines flächigen Halbfertigprodukts, insbesondere wie vorhergehend beschrieben. Das Verfahren umfasst die Schritte:
a) Einbetten von Fasern in eine Matrix aufweisend wenigstens eine latent reaktive Kunststoffzusammensetzung, welche zu einem Elastomer aushärtbar ist,
b) Aufbringen der eingebetteten Fasern auf eine thermoplastische Folie.

Die thermoplastische Folie kann eine Mehrschichtfolie sein, insbesondere wie vorhergehend beschrieben.

Die thermoplastische Folie kann aus mindestens einer unpolaren Schicht aufweisend mindestens ein apolares Polymer und mindestens einer polaren Schicht aufweisend mindestens ein polares Polymer ist. Die apolaren Polymere können aus der Gruppe wie vorhergehend beschrieben ausgewählt sein. Die polaren Polymere können aus der Gruppe wie vorhergehend beschrieben ausgewählt sein.

Vorzugsweise werden die eingebetteten Fasern auf die mindestens eine polare Schicht der Mehrschichtfolie aufgebracht.

Vorteilhafterwiese werden die Fasern zum Einbetten in Schritt a) gespreizt. Durch das Spreizen wird ein erhöhter Benetzungsgrad der Fasern erreicht. Die Fasereinbindung wird optimiert. Es ist auch möglich, das einzelne Fasern mit unterschiedlichen Kunststoffzusammensetzungen umhüllt werden. Damit lassen sich weitere Eigenschaften im Halbfertigprodukt kombinieren.

Das Spreizen und Imprägnieren der Fasern ist in WO 2018/234423 A1 beschrieben, deren Inhalt hiermit in diese Anmeldung aufgenommen wird. Die imprägnierten Fasern können - noch vor dem Trocknen - auf den thermoplastischen Klebefilm abgelegt werden. Dazu wird der Film von unten zulaufen gelassen, die nassen, ausgerichteten Fasern darauf abgelegt und die Folie/Fasern-Kombination durch einen Ofen geführt, so dass die Matrix verfilmt (trocknet). Die Fasern bilden dadurch eine Haftung von 0,1 - 1,0 N/mm, nach T-Peel Test in Anlehnung an DIN EN ISO 11339. Diese Haftung ist ausreichend, um eine Weiterverarbeitung als latent reaktiven faserverstärkten Klebefilm zu gewährleisten, ohne dass sich die Fasern vor der eigentlichen Verklebung von der Folie lösen.

Der Haftungsaufbau kann durch die Vernetzung der Matrix beim eigentlichen Verklebungsschritt erfolgen. Die Haftung steigt dann auf Werte von teilweise über 1,0 N/mm, insbesondere, wenn die Chemie der Matrix und diejenige der obersten Folienschicht kompatibel sind.

Diese Herstellungsart ergibt eine noch höhere Haftung, als wenn die Folie und der unidirektionale faserverstärkte Klebefilm separat hergestellt werden und bei der Verklebung nur aufeinandergelegt werden. Die Haftwerte sind ca. 50% höher.

Ohne an eine Theorie gebunden zu sein, könnte die verbesserte Haftung im Vernetzungsprozess der Matrix liegen. Bei einem Sandwichaufbau (Aufeinanderlegen) muss die Matrix die Filmoberfläche benetzen, wozu eine niedrige Viskosität von Vorteil ist. Gleichzeitig beginnt mit dem Verkleben die Vernetzung, die zu einem Viskositätsanstieg führt. Somit wird die optimale Benetzung durch die gleichzeitig stattfindende Benetzung behindert.

Wird hingegen die Matrix (und mit ihr die Fasern) als Dispersion aufgetragen, wird der Film optimal benetzt und behält die optimale Benetzung nach dem Trocknen der Matrix bei. Die Benetzung und die Vernetzung sind zeitlich getrennt, was in höheren Haftwerten bei ansonsten identischer chemischer Zusammensetzung resultiert.

Nach Schritt b) kann eine Trocknung bei maximal 50 °C, bevorzugt bei maximal 35°C, erfolgen.

Des Weiteren kann es vorteilhaft sein, wenn die Folie vor Schritt b) vorbehandelt wird. Die Vorbehandlung kann mit Corona, Plasma oder Beflammung erfolgen. Die Vorbehandlung optimiert die Benetzung der Folie. Insbesondere bei einer Folie mit apolaren Polymeren kann eine Vorbehandlung sinnvoll sein, um eine optimale Benetzung und Verklebung zu gewährleisten.

Ein weiterer Aspekt der Erfindung betrifft ein flächiges Halbfertigprodukt, insbesondere wie vorhergehend beschrieben, herstellbar mit einem Verfahren wie vorhergehend beschrieben.

Ein weiterer Aspekt der Erfindung betrifft die Verwendung eines flächigen Halbfertigprodukts wie vorhergehend beschrieben für die Herstellung von Kleidung, Fahrzeugbauteile, Reifen, Sport- und Freizeitartikel, Werkzeuge, Koffer, Maschinenbauteile, Gebäudemembran, Schmuck, Antriebs- und Transportbänder, Verpackungen, Baustoffe, Reparaturmaterialien.

Nachfolgend wird die Erfindung anhand von Ausführungsbeispielen näher erläutert. Diese sind nicht einschränkend zu verstehen.

### Beispiele

Als Dispersion 1 wurde eine wässrige, anionische Dispersion aus aliphatischem Polyurethan, bestehend aus Dispercoll^{®} U 56 (erhältlich von Covestro, Leverkusen, Deutschland) und oberflächendeaktiviertes Desmodur^{®} Z 2589 (erhältlich von Covestro, Leverkusen, Deutschland) verwendet. Der Feststoffgehalt betrug ca. 60%.

Als Dispersion 2 wurde eine wässrige, anionische Dispersion aus aromatischem Polyurethan bestehend aus Dispercoll^{®} U 56 (erhältlich von Covestro, Leverkusen, Deutschland) und oberflächendeaktiviertes Dispercoll^{®} BL XP 2514 (erhältlich von Covestro, Leverkusen, Deutschland) verwendet. Der Feststoffgehalt betrug ca. 60%.

Als Monofolie wurde eine Flachfolienextrudierte Folie aus Hytrel^{®} 4056 (erhältlich von DuPont, Willmington, USA) mit einem Flächengewicht von 30 g/m² verwendet.

Als Mehrschichtfolie wurde nolax^{®} A22.5016, eine PP/TPU-Folie mit einem Flächengewicht von 60g/m² (erhältlich bei nolax, Sempach-Station, Schweiz) verwendet. Die Beschichtungen und Verklebungen erfolgten auf der TPU-Seite.

Zur Imprägnierung der Fasern wurde Twaron^{®} Filamentgarn (erhältich bei Twaron Teijin, Arnheim, Niederlande) auf einer Faserspreizanlage über mehrere Umlenkrollen gespreizt. Die gespreizten Fasern wurden anschliessend mittels zweier Beschichtungswalzen mit einer wässrigen Dispersion, Formulierung 1 oder 2, getränkt und auf die zulaufende Monofolie oder Mehrschichtfolie abgelegt. Anschliessend erfolgte eine Trocknung bei maximal 35°C.

Die Verklebungen erfolgten auf einer Meyer Stempelpresse bei einer Temperatur von 50°C (Vorbeschichtungen ohne Vernetzen) resp. 140°C (Verkleben mit Vernetzung) mit Presszeit von 2 Minuten und einem Druck von 5 bar. Dabei wurde auf der Seite des thermoplastischen Klebefilms ein nicht-elastisches Baumwolltextil mit einem geeigneten Haftvermittler aufgebracht. Dieses diente zur Fixierung des Klebefilms in der T-Peel Prüfung.

Zum Vergleich wurden auch Muster mit vorgefertigten latent reaktiven unidirektionalen Tapes verklebt. Diese wurden separat auf einen BOPP-Träger abgelegt und nach dem Trocknen beim Verklebeprozess auf den Klebefilm aufgelegt. Sie sind somit nicht vorfixiert.

Folgende Muster wurden hergestellt:

| **Muster** | **Fasern** | **Matrix** | **Faserverstärkter Film** | **Thermoplastischer Film** | **Vorfixierung** |
|---|---|---|---|---|---|
| A | - | - | Twaron mit Disperion 1 | Monofolie | Nein |
| B | Twaron | Dispersion 1 | - | Monofolie | Nein |
| C | - | - | Twaron mit Disperion 2 | Monofolie | Nein |
| D | Twaron | Dispersion 2 | - | Monofolie | Nein |
| E | - | - | Twaron mit Disperion 1 | Monofolie | Ja |
| F | Twaron | Wasser | - | Monofolie | Nein |
| G | - | - | Twaron mit Disperion 1 | Mehrschicht-Folie | Nein |
| H | Twaron | Dispersion 1 | - | Mehr- | Nein |
| | | | | schicht-Folie | |

### T-Peel-Prüfungen

Die T-Peel Prüfungen erfolgten an einer Zugprüfmaschine Zwick Typ 1120.25 in Anlehnung an DIN 53357 an 25 mm breiten und 250 mm langen Prüfkörpern mit einer Abzugsgeschwindigkeit von 100 mm/min bei 23°C und 50% rel. Feuchte.

Es wurden folgende Trennfestigkeiten ermittelt:

| **Muster** | **Trennfestigkeit (N/cm)** |
|---|---|
| A | 10.5 +/- 2.1 |
| B | 16.2 +/- 2.6 |
| C | 3.0 +/- 0.8 |
| D | 24.6 +/- 5.0 |
| E | 10.9 +/- 1.0 |
| F | 2.3 +/- 0.3 |
| G | 2.8 +/- 0.3 |
| H | 3.8 +/- 0.3 |

Die Vergleiche von Muster A mit Muster B, Muster C mit Muster D, sowie Muster G und Muster H zeigen den positiven Einfluss des Spreizens der Fasern direkt auf der Heissklebefolie im Vergleich zum Laminieren eines vorgefertigten unidirektionalen faserverstärkten Klebefilms auf die gleiche Heissklebefolie.

Der Vergleich von Muster A mit Muster E zeigt, dass bei einem vorsichtigen Vorbeschichten mit einem latent reaktiven unidirektionalen faserverstärkten Klebefilms und dem gleichzeitigen Verpressen die gleichen Trennfestigkeiten erzielt werden können. Ein Vergleich mit Muster B zeigt aber, dass die Benetzung durch das Vorbeschichten nicht so gut ist, wie wenn die Fasern direkt auf dem Film aufgebracht und die Dispersion auf dem Film getrocknet wird. Somit geht auch bei Muster E trotz Vorbeschichtung ein Teil der optimalen Benetzung wegen der einsetzenden Vernetzung im Verklebeprozess verloren.

Ein Vergleich von Muster B mit Muster F zeigt, dass eine simple Fixierung der Fasern in der thermoplastischen Folie deutlich geringere Trennfestigkeiten erzeugt als mit einer Matrix. Die Viskosität der thermoplastischen Klebefolie ist zu hoch, um eine gute Benetzung der Fasern zu ermöglichen.

### Zug-Dehnungs-Prüfungen

Folgende Muster wurden hergestellt:

| **Muster** | **Fasern** | **Matrix** | **Faserverstärkter Film** | **Thermoplastischer Film** | **Vorfixierung** |
|---|---|---|---|---|---|
| I | - | - | Twaron mit Disperion 1 | | Nein |
| J | Twaron | Dispersion 1 | - | Monofolie | Nein |

Bei den Muster I handelt es sich um den unidirektionalen faserverstärkten Klebefilm, das in den Mustern A, E und G verwendet wurde. Beim Muster J handelt es sich um das Muster B, ohne dass dieses vernetzt wurde.

Es wurden folgende Zugfestigkeiten und Bruchdehnungen quer zur Faserrichtung gefunden:

| **Muster** | **Zugfestigkeit (MPa)** | **Bruchdehnung quer zur Faserrichtung (%)** |
|---|---|---|
| 1 | 0.56 +/- 0.15 | 0 |
| J | 23.43 +/- 2.56 | 1218 +/- 41 |

Das Muster I reisst unmittelbar bei Prüfungsbeginn.

Das Muster I zeigt deutlich, dass ein unidirektionaler faserverstärkter Klebefilm ohne Klebefolie sehr empfindlich auf Belastungen quer zur Faserrichtung reagiert, was die Applikationstechnik anspruchsvoll macht und das Tape anfällig für Beschädigungen.

Das Muster J hingegen zeigt Zugfestigkeit und Bruchdehnung, wie es für einen thermoplastischen Klebefilm üblich ist. Das Handling unterscheidet sich somit nicht von der Verarbeitung einer Folie ohne Faserverstärkung.

## Patentansprüche

1. Flächiges Halbfertigprodukt aufweisend
- eine Matrix mit wenigstens einer latent reaktiven Kunststoffzusammensetzung, wobei die Kunststoffzusammensetzung zu einem Elastomer, insbesondere thermoplastischen Elastomer, aushärtbar ist,
- in der Matrix eingebettete Endlosfasern, wobei die Fasern bevorzugt unidirektional ausgerichtet sind,
**dadurch gekennzeichnet, dass** das flächige Halbfertigprodukt weiter eine thermoplastische Folie aufweist.

2. Flächiges Halbfertigprodukt nach Anspruch 1, wobei die thermoplastische Folie eine Mehrschichtfolie ist.

3. Flächiges Halbfertigprodukt nach Anspruch 2, wobei die thermoplastische Folie aus mindestens einer unpolaren Schicht aufweisend mindestens ein apolares Polymer und mindestens einer polaren Schicht aufweisend mindestens ein polares Polymer ist.

4. Flächiges Halbfertigprodukt nach Anspruch 3, wobei die mindestens eine polare Schicht den in die Matrix eingebetteten Endlosfasern zugewandt ist.

5. Flächiges Halbfertigprodukt nach Anspruch 3 oder 4, wobei das mindestens eine apolare Polymer ausgewählt ist aus der Gruppe: Polypropylen, modifiziertes Polypropylen, Polyethylen, modifiziertes Polyethylen, Polyoxymethylen, Ethylvinylacetat, Styrolblockcopolymere, Ionomere, Olefine, Kautschuke oder Plastomere sowie Copolymere davon.

6. Flächiges Halbfertigprodukt nach einem der Ansprüche 3 bis 5, wobei das mindestens eine polare Polymer ausgewählt ist aus der Gruppe: Polyamide, Copolyamide, Polyester, Copolyester, Polyurethane, Polyetherblockamide, Acrylate oder Polycarbonate.

7. Flächiges Halbfertigprodukt nach einem der vorherigen Ansprüche, wobei die Kunststoffzusammensetzung Polyurethan und ein latent reaktives, insbesondere verkapseltes, oberflächendeaktiviertes oder blockiertes Isocyanat, umfasst.

8. Flächiges Halbfertigprodukt nach einem der vorherigen Ansprüche, wobei die Kunststoffzusammensetzung Polyurethan und ein latent reaktives Carbodiimid umfasst.

9. Verfahren zur Herstellung eines flächigen Halbfertigprodukts, insbesondere nach einem der Ansprüche 1 bis 8, umfassend die Schritte:
a) Einbetten von Fasern in eine Matrix aufweisend wenigstens eine latent reaktive Kunststoffzusammensetzung, welche zu einem Elastomer aushärtbar ist,
b) Aufbringen der eingebetteten Fasern auf eine thermoplastische Folie.

10. Verfahren nach Anspruch 9, wobei die thermoplastische Folie eine Mehrschichtfolie ist.

11. Verfahren nach Anspruch 10, wobei die thermoplastische Folie aus mindestens einer unpolaren Schicht aufweisend mindestens ein apolares Polymer und mindestens einer polaren Schicht aufweisend mindestens ein polares Polymer ist.

12. Verfahren nach Anspruch 11, wobei die eingebetteten Fasern auf die mindestens eine polare Schicht der Mehrschichtfolie aufgebracht werden.

13. Verfahren nach einem der Ansprüche 9 bis 12, wobei die Fasern zum Einbetten in Schritt a) gespreizt werden.

14. Verfahren nach einem der Ansprüche 9 bis 13, wobei die Folie vor Schritt b) vorbehandelt wird.

15. Verwendung eines flächigen Halbfertigprodukts nach einem der Ansprüche 1 bis 8 für die Herstellung von Kleidung, Fahrzeugbauteile, Reifen, Sport- und Freizeitartikel, Werkzeuge, Koffer, Maschinenbauteile, Gebäudemembran, Schmuck, Antriebs- und Transportbänder, Verpackungen, Baustoffe, Reparaturmaterialien.
